(19) Europäisches Patentamt
European Patent Office
Office européen des brevets

(11) Veröffentlichungsnummer: **0 039 307**
**A2**

(12) # EUROPÄISCHE PATENTANMELDUNG

(21) Anmeldenummer: **81810147.9**

(22) Anmeldetag: **15.04.81**

(51) Int. Cl.³: **C 09 B 67/22**
C 09 B 63/00, C 09 D 17/00
C 09 D 11/00

(30) Priorität: **23.04.80 CH 3129/80**

(43) Veröffentlichungstag der Anmeldung:
**04.11.81 Patentblatt 81/44**

(84) Benannte Vertragsstaaten:
**CH DE FR GB IT LI**

(71) Anmelder: **CIBA-GEIGY AG**
**Patentabteilung Postfach**
**CH-4002 Basel(CH)**

(72) Erfinder: **Rouèche, Armand, Dr.**
**Lerchenstrasse 38**
**CH-4103 Bottmingen(CH)**

(54) **Pigmentpräparate, Verfahren zu deren Herstellung sowie deren Verwendung zum Pigmentieren von wässrigen, alkoholischen oder wässrig-alkoholischen Druck- und Lackierfarbensystemen.**

(57) Pigmentpräparate, die

1) 10-90 Gew.%, bezogen auf des gesamte Präparat, eines Pigmentgemisches aus
a) 99,5-90 Mol.%, bezogen auf das Pigmentgemisch, mindestens eines Monoazopigments der allgemeinen Formel

$$A - N = N - B$$

und

b) 0,5-10 Mol.%, bezogen auf das Pigmentgemisch, mindestens eines, durch die Anwesenheit mindestens einer -COOH-, $-SO_3H$-, Metallcarboxylat- oder Metallsulfonatgruppe pro Pigmentmolekül, charakterisierten Monoazopigments der Formel

$$(A' - N = N - B' \rightarrow\!\!\!\!-\!\!-\!\!(X)_m$$

und

2) 90-10 Gew.%, bezogen auf das gesamte Präparat, eines carbonsäuregruppenhaltigen Polyacrylatharzes, enthalten.

Die neuen Pigmentpräparate eignen sich ausgezeichnet zum Pigmentieren von wässrigen, alkoholischen und alkoholisch-wässrigen Druck- und Lackierfarbensystemen und zeichnen sich insbesondere durch gute Lagerstabilität aus.

Für die Bedeutung der Substituenten A, B, A', B', X und m wird auf Anspruch 1 verwiesen.

EP 0 039 307 A2

0039307



CIBA-GEIGY AG
Basel (Schweiz)

3-12829/+

# Pigmentpräparate, Verfahren zu deren Herstellung sowie deren Verwendung zum Pigmentieren von wässrigen, alkoholischen oder wässrig-alkoholischen Druck- und Lackierfarbensystemen

Die vorliegende Erfindung betrifft neue Pigmentpräparate, Verfahren zu deren Herstellung sowie deren Verwendung zum Pigmentieren von wässrigen, alkoholischen oder wässrig-alkoholischen Druck- und Lackierfarbensystemen.

Monoazopigmente aus der Reihe der Acetessigsäurearylide, der Naphthole oder der Naphthoesäurearylide stellen wertvolle Pigmente dar, die zur Herstellung von Lacken, Anstrichmitteln und Druckfarben eine grosse wirtschaftliche Bedeutung erlangt haben. Es ist aber auch bekannt, dass diese Pigmente eine gewisse Löslichkeit in organischen Lösungsmitteln aufweisen, die sich auf ihre Verwendbarkeit sehr nachteilig auswirken kann. So zeigt sich beispielsweise, dass unter Umständen schon beim Dispergieren von bestimmten Pigmenten in Druckfirnissen, vor allem aber bei der Lagerung solcher Druckfarben, die Färbstärke häufig abnimmt, was zu unerwünschten Erscheinungen, wie Farbtonänderung, Transparenzabnahme und Viskositätsveränderung, führt.

Zur Verhinderung der geschilderten unerwünschten Erscheinungen in organischen Lösungsmittelsystemen wird beispielsweise in den beiden DE-AS 2 012 152 und 2 012 153 vorgeschlagen, ein Pigmentgemisch einzusetzen, welches einen kleineren Anteil Azopigment enthält, dessen Kupplungskomponente durch eine oder zwei freie Carbonsäure- oder Sulfonsäuregruppen substituiert ist.

Gemäss der japanischen Auslegeschrift 70-11026 kann die Viskosität von Dispersionen bestimmter Azopigmente der Acetessigsäurearylid-Reihe in niedrig-viskosen nicht wässrigen Trägermaterialien, wie Nitrocellulose- oder Rosinharz/Toluol-Trägermaterialien, dadurch verbessert werden, dass man Azopigmentgemische herstellt, die einen kleineren Anteil an entsprechenden Azopigment-Erdalkalimetallsulfonaten oder Azopigment-Aminsalzen enthalten.

Es wurde nun gefunden, dass durch gleichzeitige Vermischung eines Monoazopigmentes, eines kleineren Anteils eines durch mindestens eine $-COOH-$, $-SO_3H-$, Metallcarboxylat- oder Metallsulfonatgruppe substituierten Monoazopigmentes und eines carbonsäuregruppenhaltigen Polyacrylatharzes zum Pigmentieren von wässrigen, alkoholischen oder wässrig-alkoholischen Druck- und Lackierfarbensystemen geeignete Pigmentpräparate erhalten werden, die trotz der in solchen Systemen zu erwartenden Dissoziierung überraschenderweise eine sehr gute Rekristallisations- bzw. Lagerstabilität, verbunden mit guten Pigmenteigenschaften, aufweisen, ohne dass dabei die rheologischen Eigenschaften der Pigmentpräparate merklich beeinträchtigt werden.

Gegenstand der Erfindung sind somit neue Pigmentpräparate, die

1) 10-90 Gew.%, bezogen auf das gesamte Präparat, eines Pigmentgemisches aus

   a) 99,5-90 Mol.%, bevorzugt 99 bis 97 Mol.%, bezogen auf das Pigmentgemisch, mindestens eines Monoazopigments der allgemeinen Formel I

   $$A - N = N - B \qquad (I)$$ und

   b) 0,5-10 Mol.%, bevorzugt 1-3 Mol.%, bezogen auf das Pigmentgemisch, mindestens eines Monoazopigments der allgemeinen Formel II

   $$(A' - N = N - B' \rightarrow (X)_m \qquad (II),$$

worin A und A' Reste einer Diazokomponente der Benzol- oder Naphthalinreihe bedeuten, B und B' Reste einer Kupplungskomponente der Acetessigsäurearylamid-, Naphthol- oder Naphthoesäurearylamidreihe sind, X -COOH, $-SO_3H$, eine Gruppe der Formel III

$$-COO^{\ominus} \frac{Me}{n}^{n\oplus} \qquad \text{(III)}$$

oder der Formel IV

$$-SO_3^{\ominus} \frac{Me}{n}^{n\oplus} \qquad \text{(IV)},$$

worin Me ein Metall ist und m und n unabhängig voneinander die Zahlen 1, 2 oder 3 bedeuten, und

2) 90-10 Gew.%, bezogen auf das gesamte Präparat, eines carbonsäuregruppenhaltigen Polyacrylatharzes enthalten.

Von besonderem Interesse sind Pigmentpräparate wie oben beschrieben, worin in den Formeln I und II jeweils

A einen Rest der Formeln

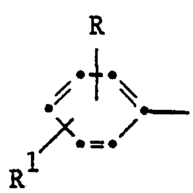

oder

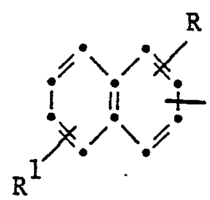

,

B einen Rest der Formeln

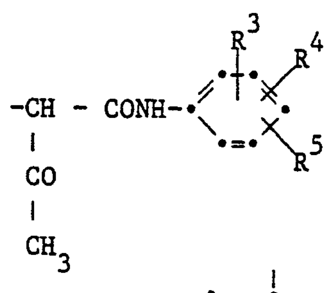

,

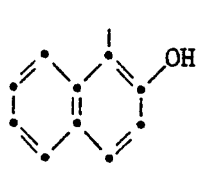

oder

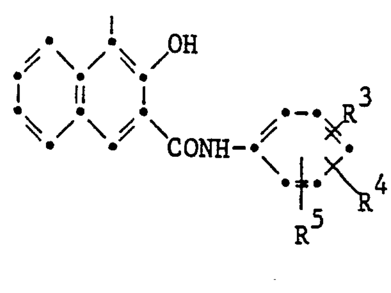

,

A'—(X)$_m$ einen Rest der Formeln

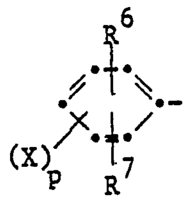

oder

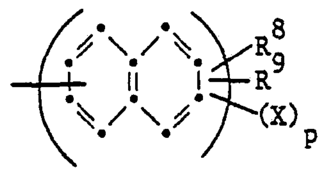

und

B'—(X)$_m$ einen Rest der Formeln

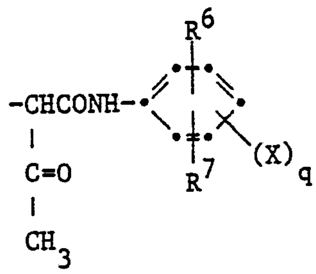

,

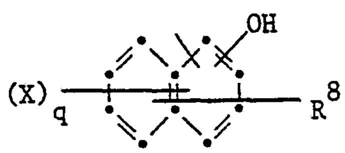

oder

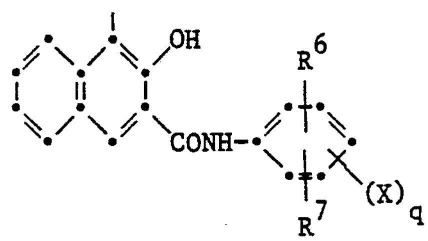

bedeuten, worin R und $R^1$ unabhängig voneinander Wasserstoff, Halogen, $C_1$-$C_2$ Alkyl, $C_1$-$C_2$ Alkoxy, $C_2$-$C_4$ Alkylcarbamoyl, $C_2$-$C_4$ Alkoxycarbonyl, Trifluormethyl oder Nitro, $R^3$, $R^4$ und $R^5$ unabhängig voneinander Wasserstoff, Halogen, $C_1$-$C_2$ Alkyl, $C_1$-$C_2$ Alkoxy, $C_2$-$C_4$ Alkylcarbamoyl oder Nitro, $R^6$ und $R^7$ unabhängig voneinander Wasserstoff, Halogen, Methyl, Methoxy, Trifluormethyl oder Nitro, $R^8$ und $R^9$ unabhängig voneinander Wasserstoff oder Halogen bedeuten, X die oben angegebene Bedeutung hat, p und q unabhängig voneinander die Zahlen Null, 1, 2 oder 3 bedeuten, mit der Bedingung, dass die Summe p + q mindestens 1 ist.

Bedeuten etwaige Substituenten Halogen, so handelt es sich insbesondere um Chlor. Stellen etwaige Substituenten $C_1$-$C_2$ Alkyl dar, so bedeuten sie Aethyl oder insbesondere Methyl. Stellen etwaige Substituenten $C_1$-$C_2$ Alkoxy dar, so handelt es sich um Aethoxy oder bevorzugt um Methoxy. Bedeuten etwaige Substituenten $C_2$-$C_4$ Alkylcar-

bamoyl, so stellen sie beispielsweise Methyl-, Aethyl- oder n-Propylcarbamoyl dar. Bevorzugt ist Methylcarbamoyl. Stellen etwaige Substituenten $C_2$-$C_4$ Alkoxycarbonyl dar, so bedeuten sie beispielsweise Methoxy-, Aethoxy- oder n-Propoxycarbonyl. Bevorzugt sind Methoxy- und Aethoxycarbonyl.

X stellt vorzugsweise eine Gruppe der Formeln III oder IV dar.

Me bedeutet als Metall z.B. ein einwertiges Alkalimetall, wie Na, K oder Li, ein dreiwertiges Metall, wie Al, bevorzugt aber ein zweiwertiges Metall, wie Ba, Mn, Co, Ni, Cu, Zn und insbesondere Ca, Mg oder Sr.

Bevorzugt sind Pigmentpräparate der oben beschriebenen Art, die mindestens ein Monoazopigment der Formeln V oder VI

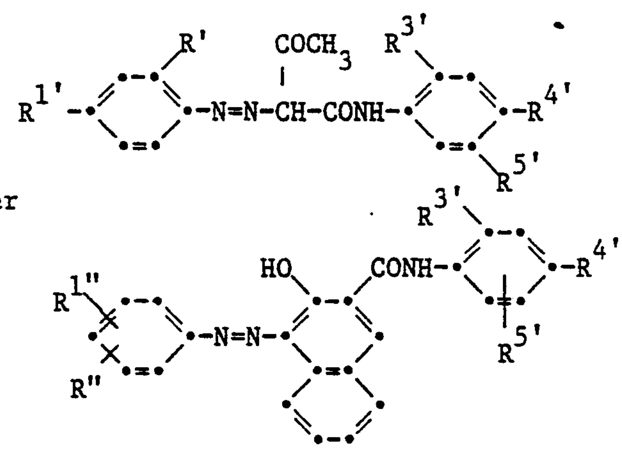

(V)

oder

(VI)

und mindestens ein Monoazopigment der Formeln VII, VIII oder IX

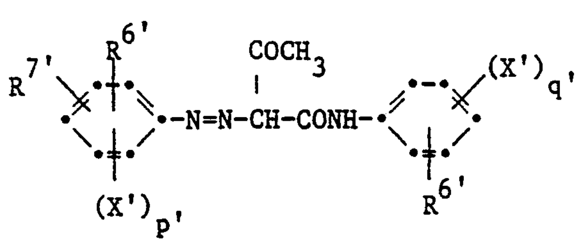

(VII),

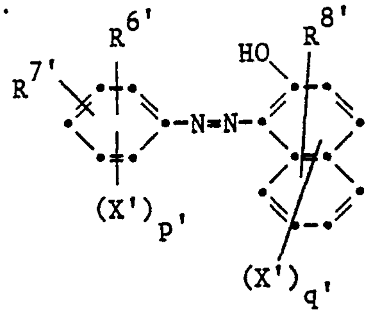

(VIII) oder

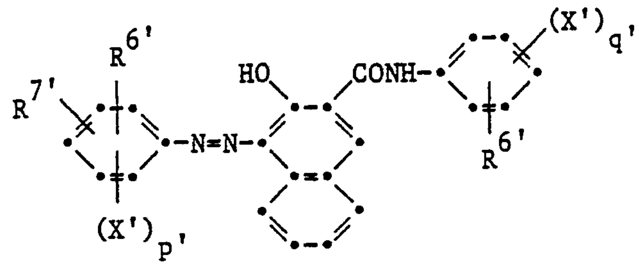

(IX) enthalten,

worin R' und $R^1$ unabhängig voneinander Wasserstoff, Chlor, Methyl, Methoxy, Aethoxy oder Nitro, R" und $R^{1"}$ unabhängig voneinander Wasserstoff, Chlor, Methyl, Methoxy oder Nitro, $R^{3'}$ und $R^{5'}$ unabhängig voneinander Wasserstoff, Chlor, Methyl, Methoxy oder Aethoxy, $R^{4'}$ Wasserstoff, Chlor, Methyl, Methoxy, Aethoxy oder Methylcarbamoyl, $R^{6'}$ Wasserstoff, Chlor, Methyl, Methoxy oder Nitro, $R^{7'}$ Wasserstoff oder Chlor und $R^{8'}$ Wasserstoff oder Brom bedeuten, X' -COOH, $-SO_3H$ oder vorzugsweise eine der beiden Gruppen der Formeln IIIa oder IVa

$$-COO^{\ominus}\frac{Me^{\oplus\oplus}}{2} \quad \text{oder} \quad -SO_3^{\ominus}\frac{Me^{\oplus\oplus}}{2}$$

(IIIa) (IVa)

bedeutet, worin Me Ca, Mg oder Sr sein kann, p' und q' unabhängig voneinander die Zahlen Null oder 1 bedeuten, mit der Bedingung, dass die Summe p' + q' mindestens 1 sein muss.

Stellt $R^{4'}$ Methylcarbamoyl dar, so sind $R^{3'}$ und $R^{5'}$ vorzugsweise Wasserstoff. In Formeln V und IX stellen $R^{3'}$, $R^{4'}$, $R^{5'}$ und $R^{6'}$ ganz besonders bevorzugt je Wasserstoff dar.

Besonders bevorzugt sind Pigmentpräparate, die als Pigmentgemisch ein solches aus

a) einem Monoazopigment der Formel

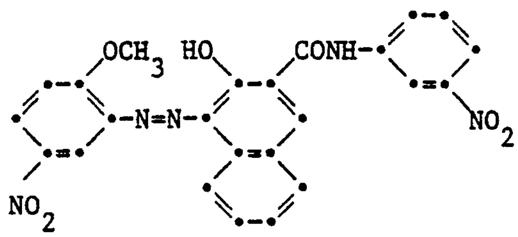

und

einem Monoazopigment der Formel

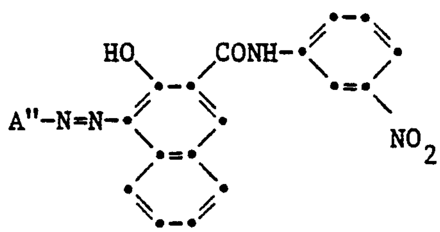

;

b) einem Monoazopigment der Formel

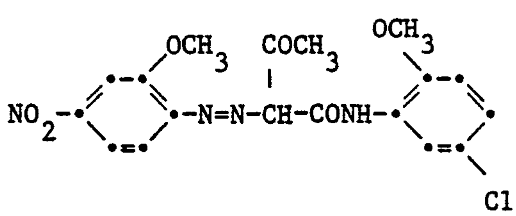

und

einem Monoazopigment der Formel

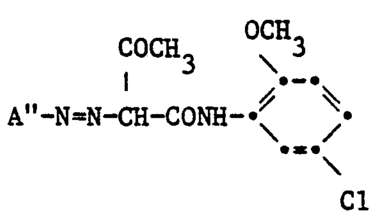

oder insbesondere ein Pigmentgemisch aus

c) einem Monoazopigment der Formel

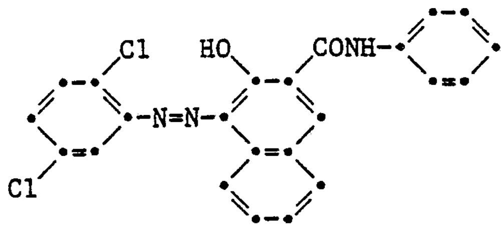

und

einem Monoazopigment der Formel

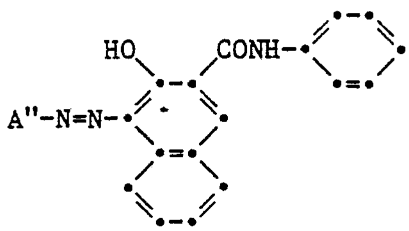

oder

d) einem Monoazopigment der Formel

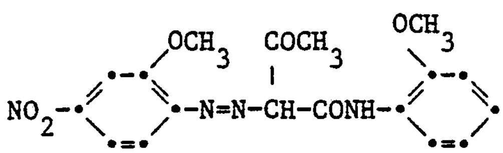

und

einem Monoazopigment der Formel

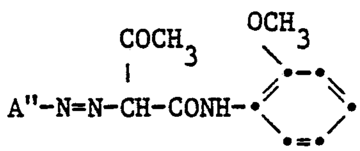

enthalten, wobei A" 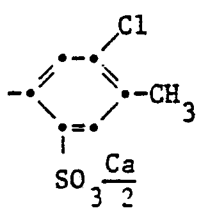 darstellt, und der

Anteil an $-SO_3\frac{Ca}{2}$-gruppenhaltigem Monoazopigment jeweils 1,5-3 Mol%, bezogen auf das Pigmentgemisch, beträgt.

Die Herstellung der erfindungsgemässen Pigmentpräparate kann nach verschieaenen Methoden erfolgen, z.B. dadurch, dass man in wässrigem Medium eine Kupplungskomponente oder ein Gemisch von Kupplungskomponenten der Naphthol-, Naphthoesäurearylamid- oder Acetessigsäurearylamidreihe mit einer Diazoniumverbindung eines Amins der Benzol- oder Naphthalinreihe oder einem Gemisch solcher Diazoniumverbindungen im Molverhältnis von etwa 1:1 kuppelt, wobei der Anteil der freie Carbonsäure- oder Sulfonsäuregruppen enthaltenden Kupplungskomponenten und/oder Diazokomponenten 0,5-10 Mol.%, bevorzugt 1-3 Mol-%, betragen muss, unter zusätzlicher Beimischung vor, während oder nach der Kupplung einer alkalischen Polyacrylatharzlösung. Nach der Kupplung wird das Reaktionsgemisch gegebenenfalls zur Bildung der gewünschten Metallcarboxylate oder -sulfonate mit einem wasserlöslichen Salz eines Metalles der Wertigkeit n gemäss obiger Definition, bevorzugt einem Acetat oder Halogenid, umsetzt. Zum Abschluss wird das Harz durch Ansäuern (beispielsweise mit verdünnter Salzsäure), zweckmässig bis zu einem pH von in der Regel 4-4,5, als freie Säure ausgefällt, und das erhaltene Pigmentpräparat wird nach üblichen Methoden aufgearbeitet.

Die Zugabe der stabilisierenden, saure Gruppen enthaltenden Kupplungs- und/oder Diazokomponenten erfolgt vor oder während der Kupplungsreaktion der Hauptkomponenten. Werden saure Diazokomponenten zugegeben, so sollen die von sauren Gruppen freien und die sauren Amine vorzugsweise getrennt diazotiert und anschliessend entweder getrennt oder miteinander vermischt für die Kupplung verwendet werden. Werden saure Kupplungskomponenten zugegeben, so können sie getrennt oder mit den von sauren Gruppen freien Kupplungskomponenten vermischt zugegeben werden.

Zur Herstellung der erfindungsgemässen Pigmentpräparate geeignete saure Diazokomponenten erhält man beispielsweise durch Diazotierung der folgenden Amine: o-, m- oder p-Sulfonsäureanilin, 2-Chloranilin-5-sulfonsäure, 4-Chloranilin-2-sulfonsäure, 4-Methylanilin-2-sulfonsäure, 4-Methoxyanilin-2-sulfonsäure, 4-Chlor-5-methylanilin-2-sulfonsäure, 4-Methyl-5-chloranilin-2-sulfonsäure, 4-Nitroanilin-2-sulfonsäure, 2-Nitroanilin-4-sulfonsäure, Anthranilsäure, 3- oder 4-Aminophthalsäure, 5-Aminoisophthalsäure und 2-Aminoterephthalsäure.

Sowohl die sauren als auch die von sauren Gruppen freien Amine, die durch Diazotierung die zur Herstellung der erfindungsgemässen Pigmentpräparate erforderlichen Diazokomponenten liefern, stellen bekannte Verbindungen dar. Die Diazotierung erfolgt nach bekannten Methoden.

Saure Kupplungskomponenten, die zur Herstellung der erfindungsgemässen Pigmentpräparate in Frage kommen, sind beispielsweise: 2-Hydroxy-3-naphthoesäure, 2-Hydroxynaphthalin-5-sulfonsäure, 2-Hydroxynaphthalin-6-sulfonsäure, 2-Hydroxynaphthalin-7-sulfonsäure, 2-Hydroxynaphthalin-3,6-disulfonsäure, 2-Hydroxynaphthalin-3,7-disulfonsäure, 1-Hydroxynaphthalin-3-sulfonsäure, 1-Hydroxynaphthalin-5-sulfonsäure, 1-Hydroxynaphthalin-8-sulfonsäure, 1-Hydroxynaphthalin-3,6-disulfonsäure, 2-(2'-Hydroxy-3'-naphthoylamino)-benzoesäure, 3-(2'-Hydroxy-3'-naphthoylamino)-benzoesäure, 4-(2'-Hydroxy-3'-naphthoylamino)-benzoesäure, 2-Acetoacetylamino-benzoesäure, 3-Acetoacetylamino-benzoesäure und 4-Acetoacetylamino-benzoesäure.

Sowohl die sauren als auch die von sauren Gruppen freien Kupplungskomponenten, die zur Herstellung der erfindungsgemässen Pigmentpräparate in Frage kommen, stellen bekannte Verbindungen dar.

Die Kupplung erfolgt nach bekannten Methoden, wobei unter Umständen der Zusatz von Netz- und Dispergiermitteln, beispielsweise von nichtionogenen, kationischen oder anionischen grenzflächenaktiven Substanzen zweckmässig sein kann. Es ist auch vorteilhaft, im Anschluss an die Kupplung eine angemessene Nachbehandlung des Kupplungsgemisches durch Erhitzen auf höhere Temperaturen, vorzugsweise vor dem Ausfällen des carboxylierten Acrylatharzes, vorzunehmen und dies so lange, bis sich ausreichend kleine und feine Pigmentkristalle gebildet haben.

Die erfindungsgemässen Pigmentpräparate enthalten definitionsgemäss 10 bis 90 Gew.% Pigmentgemisch und 90 bis 10 Gew.% eines carbonsäuregruppenhaltigen Polyacrylatharzes, vorzugsweise 30 bis 70 Gew.%

Pigmentgemisch 1) und 70 bis 30 Gew.% Polyacrylatharz 2). Die Säurezahl des zu verwendenden Polyacrylatharzes beträgt zweckmässigerweise 30 bis 300, vorzugsweise 50 bis 200. Als carbonsäuregruppenhaltige Polyacrylatharze werden insbesondere solche verwendet, die durch Polymerisation von Acrylsäure und/oder Methacrylsäure oder von Acrylsäure und/oder Methacrylsäure zusammen mit anderen Acrylmonomeren, wie z.B. Acrylsäure- und Methacrylsäureestern, erhalten werden. Es können aber auch Polyacrylverbindungen verwendet werden, zu deren Herstellung auch andere polymerisierbare Carbonsäuren verwendet wurden, wie beispielsweise Crotonsäure oder ähnliche. Bevorzugt sind Polyacrylatharze, die in wässrigem, wässrig-alkoholischem oder alkoholischem Medium, gegebenenfalls unter Zusatz von Basen, löslich sind. Solche Harze sind im Handel in saurer oder in teilweise oder vollständig neutralisierter Form erhältlich.

Ausser den erfindungsgemäss zu verwendenden Komponenten können die Präparate noch andere Hilfsmittel, wie Weichmacher, Wachse, Stabilisierungs- und Füllstoffe enthalten.

Die erfindungsgemässen Pigmentpräparate können auch durch Zugabe des Pigmentgemisches nach 1) zu einer alkalischen Polyacrylatharz-Lösung mit anschliessendem Ausfällen durch Ansäuern, durch Sprühzerstäubung der Pigmentgemisch-Harz-Lösung, oder kontinuierlich oder diskontinuierlich in Knetmaschinen durch Vermischen des sauren Harzes mit dem Pigmentgemisch hergestellt werden. Bei der Herstellung im Kneter kann das Polyacrylatharz in Anwesenheit oder Abwesenheit des Pigmentgemisches aus wässrig-ammoniakalischer Lösung direkt im Kneter durch Ansäuern gefällt und das ausgeschiedene Wasser von der Trägerharzschmelze entfernt werden. Die Knetmasse aus Polyacrylatharz und Pigmentgemisch wird gegebenenfalls unter Zusatz von Lösungsmittel und Natriumchlorid als Mahlhilfskörper bis zur gewünschten Feinheit geknetet und die Masse zum trockenen Präparat aufgearbeitet. Die Präparate können auch nach dem sog. Flushverfahren, sei es in Knetapparaturen oder nach der Emulsionsflushtechnik hergestellt werden.

Als beste Produkte haben sich feste Präparate mit einem Pigmentgehalt von 50 bis 60 Gew.% erwiesen, wobei das Polyacrylatharz zweckmässig eine Säurezahl von 60 bis 200 aufwies.. Für Präparate, die besonders gut haftende Druckfarben für z.B. PVC ergeben, eignen sich vorzugsweise Harze mit einer Säurezahl von 50-120.

Die erfindungsgemässen Pigmentpräparate eignen sich ganz besonders zum Pigmentieren von wässrigen, alkoholischen und insbesondere wässrig-alkoholischen Druck- und Lackierfarbensystemen. Die damit pigmentierten Druck- und Lackierfarbensysteme zeichnen sich besonders durch gute Rekristallisations- bzw. Lagerstabilität sowie durch gute Dispergierbarkeit, Brillanz, Farbstärke, Transparenz, Licht- und Migrationsechtheit aus, ohne dass dabei die rheologischen Eigenschaften merklich beeinträchtigt werden. Sie zeigen auch eine ausgezeichnete Haftfestigkeit sowohl auf Papier als auch auf Metallen und Kunststoffen, sowie eine gute Wasserbeständigkeit der daraus hergestellten Filme.

Die erfindungsgemässen Präparate lassen sich für die verschiedensten Druck- und Lackierungsanwendungen einsetzen. Als Beispiele seien genannt: Druck und Lackierung von Papier und beschichteten Papieren, wie Tapeten, Dekorpapieren und Verpackungsmaterialien, von Aluminiumfolien, von Weich- und Hart-PVC, von Polyamid-, Polystyrol- und Celluloseacetatfilmen, von Zellglas und lackierten Zellglasqualitäten, von Corona-vorbehandelten Polyäthylen- und Polyesterfilmen und von mit Polyvinylidenchlorid beschichteten Trägerstoffen. Als Druckverfahren können beliebige bekannte Verfahren, wie Tiefdruck, Flexodruck, Siebdruck, Buchdruck, Trockenoffset und Offset und als Lackierverfahren beispielsweise das sogenannte Roller-Coating, Spritzen, Streichen und Rakeln angewendet werden.

Bei der Herstellung von Lackier- und Druckfarben werden die erfindungsgemässen Präparate zweckmässig unter Rühren in die Lösungsmittel oder Bindemittel-Lösungen eingearbeitet, wobei kein zusätzlicher Anreibprozess zur Dispergierung der Pigmente notwendig ist. Das geschieht beispielsweise nach folgenden Verfahren:

- Herstellung eines Farbkonzentrats in einem Lösungsmittel, z.B. in Aethanol, Isopropanol, Wasser/organischer Base, Wasser/organischer Base/Alkohol, in einem Acrylmonomeren oder in einer mit Lösungsmittel verdünnten Bindemittel-Lösung. Die zu wählende Präparate-, bzw.Pigment-Konzentration richtet sich nach der gewünschten Viskosität des Konzentrats und ist u.a. vom Lösungsmittel abhängig. Bevorzugte Konzentrationen liegen bei ca. 10 bis 30 Gew.% Pigment. Die so erhaltenen Konzentrate können dann mit den entsprechenden Klarlacken und Firnissen im gewünschten Verhältnis gemischt werden.
- Direktes Einrühren in die Bindemittel-Lösung oder den Firnis, gegebenenfalls unter Zusatz von Lösungs- oder Verdünnungsmittel zur Einstellung der Viskosität. Auf diese Weise können direkt verbrauchs- oder lieferfähige Lack- und Druckfarben hergestellt werden.

Ein bevorzugtes Verfahren zur Herstellung von Lackier- oder Druckfarben besteht darin, dass man die erfindungsgemässen Pigmentpräparate in Wasser, Alkohol oder bevorzugt in wässrigem Alkohol unter Zusatz von Ammoniak oder einem Amin, beispielsweise einem Mono-, Di- oder Trialkylamin, einem Alkanolamin, einem heterocyclischen Amin, wie Morpholin oder Piperazin, in das gewünschte Polymere einarbeitet, wobei das Trägerharz gelöst und das Pigment im Applikationsmedium fein dispergiert wird.

In den nachfolgenden Beispielen bedeuten die Teile, sofern nichts anderes angegeben wird, Gewichtsteile, die Prozente Gewichtsprozente und die Temperaturen sind in Celsiusgraden angegeben.

Beispiel 1: Diazotierung

a) von sauren Gruppen freie Diazokomponente:

Zu 160 Volumenteilen 80° warmem Wasser werden 38,4 Volumenteile 32%ige Salzsäure und 16,0 Teile (0,0988 Mol) 2,5-Dichloranilin gegeben. Man rührt solange bei 80°, bis das geschmolzene Amin gelöst ist. Man lässt auf 40° abkühlen und gibt dann etwa 150 Teile Eis zu, wobei die Temperatur auf annähernd 0° absinkt. Bei dieser Temperatur werden, gegebenenfalls unter Eiszugabe, innerhalb 10 Minuten portionenweise 7 Teile Natriumnitrit zugegeben. Nach einstündigem Nachrühren bei 0 bis 5° werden 0,7 Teile Aktivkohle zugesetzt, die Diazolösung wird klarfiltriert, und der Rückstand wird mit wenig Eiswasser gewaschen.

b) Saure Diazokomponente:

0,27 Teile 4-Amino-2-chlortoluol-5-sulfonsäure (0,0012 Mol) werden in wässriger 1N-Natronlauge gelöst und danach mit 1N-Salzsäure bis zur sauren Lösung versetzt. Das so erhaltene Aminochlorhydrat wird bei 0 bis 3° mittels 0,08 Teilen Natriumnitrit diazotiert. Die so erhaltene Diazoniumsalzsuspension wird dann mit der wie unter a) beschrieben erhaltenen Diazolösung vermischt.

Herstellung der Kupplungskomponente/Trägerharz-Lösung

In einer 60° warmen Lösung von 12,3 Teilen NaOH in 190 Volumenteilen Wasser werden 26,9 Teile 2-Hydroxy-3-naphthoesäure-anilid gelöst. Nach dem Abkühlen dieser Lösung auf 40° werden 145,4 Teile einer 30%igen wässrig-ammoniakalischen Dispersion eines carboxylierten Acrylcopolymeren (z.B. ®Carboset XL - 11, 30%ig mit Säurezahl 74 der B.F. Goodrich Chemical Company) zugegeben. Diese Lösung wird mit Eis auf ein Volumen von 500 ml gebracht.

Kupplung, Nachbehandlung und Ausfällen des Pigmentpräparates

Die vorgelegte, wie oben beschrieben erhaltene Kupplungskomponente/Trägerharz-Lösung (pH ca. 13,6) wird bei 10° mit dem Gemisch der Diazolösungen innerhalb von 30 Minuten versetzt, wobei der pH-Wert während der Kupplung durch Zutropfen von 1N-Natronlauge bei 12 bis

12,5 gehalten wird. Nach der Zugabe der Diazolösung werden zur Bildung des Calciumsalzes 0,07 Teile Calciumchlorid (als wässrige Lösung) zugegeben. Zur Herstellung von kleinen feinen Pigmentkristallen wird noch 2 Stunden durch Rühren bei 70° nachbehandelt. Dann wird der pH-Wert der Suspension durch langsames Zutropfen von 1N-Salzsäure bei 55° auf 4,5 eingestellt, wobei das Acrylatharz ausfällt. Nach einer Stunde Nachrühren bei 55° wird das erhaltene Pigmentpräparat abfiltriert, mit kaltem Wasser neutral gewaschen und bei 70-80° im Vakuumtrockenschrank getrocknet. Man erhält 83 g (95% d.Th.) trockenes Pigmentpräparat mit einem Pigmentgehalt. von 50%.

Das obige Pigmentpräparat wird beispielsweise gemäss nachstehendem Beispiel 8 zu einer wässrig-alkoholischen Druckfarbe weiterverarbeitet. Die erhaltene Druckfarbe wird auf ihre Lagerstabilität geprüft. Hierbei zeigt sich, dass die mit dem erfindungsgemässen Pigmentpräparat erhaltene Druckfarbe nach 7 Tagen Lagerung bei 5° bzw. 50° Drucke von sehr guter Transparenz ergibt. Dabei bleibt der Farbton der mit dem erfindungsgemässen Präparat erhaltenen Drucke praktisch unverändert.
Setzt man im obigen Beispiel anstelle von Calciumchlorid eine entsprechende Menge Magnesiumchlorid zur Bildung des Magnesiumsalzes ein, so erhält man nach dem Kuppeln, Nachbehandeln und Ausfällen ein Pigmentpräparat, das bezüglich Lagerstabilität eine gleich gute Druckfarbe ergibt.

Beispiel 2: Gemisch der Diazolösungen

8,23 Teile (0,049 Mol) 4-Nitro-2-methoxy-anilin und 0,22 Teile (0,001 Mol) 2-Amino-4-chlor-5-methylbenzolsulfonsäure werden separat wie in Beispiel 1a) und b) mit Salzsäure und Natriumnitrit in wässriger Lösung diazotiert, und die beiden erhaltenen Diazolösungen werden anschliessend miteinander vermischt.

Kupplungskomponente-Lösung

In einer Lösung von 3 Teilen NaOH in 300 Volumenteilen Wasser werden bei Raumtemperatur 11 Teile Acetoacet-o-anisidid gelöst.

Kupplung, Nachbehandlung und Ausfällen des Pigmentpräparates

In das vorgelegte oben beschriebene Gemisch der Diazolösungen werden etwa 8 Teile kristallines Natriumacetat gegeben. Danach wird innerhalb von 30 Minuten bei 5 bis 10° und pH 4-4,5 die oben beschriebene Kupplungskomponente-Lösung zugetropft. Nach der Kupplung wird die erhaltene Pigmentsuspension mit 1N-Natronlauge auf pH 9 eingestellt und mit einer Lösung von 0,057 Teilen $CaCl_2$ (97%ig) in 5 Volumenteilen Wasser zur Bildung des Calciumsalzes versetzt. Anschliessend werden 64,4 Teile einer 30%igen wässrigen carboxylierten Acryl-Copolymer-Dispersion (Carboset XL 11) zugegeben, wobei der pH-Wert der Pigmentdispersion mittels 1N-Natronlauge auf 9 gehalten werden muss. Nach zweistündiger Nachbehandlung durch Rühren bei 70° wird das Trägerharz bei 55° durch langsames Zutropfen von 1N-Salzsäure bis pH 4,5 ausgefällt. Nach einstündigem Weiterrühren bei 55° wird das erhaltene Pigmentpräparat abfiltriert, mit Wasser neutral gewaschen und bei 70 bis 80° im Vakuum getrocknet. Man erhält 37,5 Teile (97% d.Th.) Pigmentpräparat mit einem Pigmentgehalt von 50%.

Eine mit dem obigen Pigmentpräparat erhaltene wässrig-alkoholische Druckfarbe zeigt eine sehr gute Lagerstabilität über 7 Tage bei 5° bzw. 50°, wobei Farbton, Farbstärke und Transparenz der Drucke praktisch unverändert bleiben.
Verwendet man im obigen Beispiel zur Herstellung des Gemisches der Diazolösungen anstelle von 2-Amino-4-chlor-5-methylbenzolsulfonsäure 0,001 Mol 4-Amino-3-nitrobenzolsulfonsäure, 2-Aminobenzoesäure, 3-Aminobenzoesäure, 3-Aminophthalsäure oder 4-Aminobenzolsulfonsäure, so erhält man bei sonst gleicher Arbeitsweise Pigmentpräparate mit gleich guten Stabilisierungseffekten.

Beispiel 3: Diazotierung

8,4 Teile (0,05 Mol) 5-Nitro-o-anisidin werden nach üblichen Methoden mittels Salzsäure und Natriumnitrit in wässriger Lösung diazotiert.

Kupplungskomponenten-Mischung

In einer Lösung von 3 Teilen NaOH in 300 Volumenteilen Wasser werden 10,05 Teile Acetoacet-o-anisidid (0,0457 Mol) und 0,33 Teile 3-Acetoacetylamino-benzoesäure (0,0043 Mol) bei Raumtemperatur gelöst.

Kupplung, Nachbehandlung und Ausfällen des Pigmentpräparates

In die vorgelegte oben beschriebene Diazolösung werden etwa 8 Teile kristallines Natriumacetat gegeben.Danach wird innerhalb von 30 Minuten bei 5 bis 10° und pH 4-4,5 die oben beschriebene Kupplungskomponenten-Lösung zugetropft. Nach der Kupplung wird die erhaltene Pigmentsuspension mit 1N-Natronlauge auf pH 9 eingestellt und mit einer Lösung von 0,088 Teilen $CaCl_2$ (97%ig) in 5 Volumenteilen Wasser zur Bildung des Calciumsalzes versetzt. Anschliessend werden 64,4 Teile einer 30%igen wässrigen carboxylierten Acryl-Copolymer-Dispersion (Carboset XL 11) zugegeben, wobei der pH-Wert der Pigmentdispersion mittels 1N-Natronlauge auf 9 gehalten werden muss. Nach zweistündiger Nachbehandlung durch Rühren bei 70°C wird das Trägerharz bei 55° durch langsames Zutropfen von 1N-Salzsäure bis pH 4 ausgefällt. Nach einstündigem Weiterrühren bei 55° wird das erhaltene Pigmentpräparat abfiltriert, mit Wasser neutral gewaschen und bei 70 bis 80° im Vakuum getrocknet. Man erhält 38,4 Teile (99,4% d.Th.) Pigmentpräparat mit einem Pigmentgehalt von 50%.

Eine mit dem obigen Pigmentpräparat erhaltene wässrig-alkoholische Druckfarbe zeigt eine sehr gute Lagerstabilität über 7 Tage bei 5° bzw. 50°, wobei Farbton, Farbstärke und Transparenz der Drucke praktisch unverändert bleiben.

Beispiel 4: Diazotierung

Von sauren Gruppen freie Diazokomponente:

Zu 160 Volumenteilen 80° warmem Wasser werden 38,4 Volumenteile 32%ige Salzsäure und 16,2 Teile (0,1 Mol) 2,5-Dichloranilin gegeben. Man rührt solange bei 80°, bis das geschmolzene Amin gelöst ist. Man lässt auf 40° abkühlen und gibt dann etwa 150 Teile Eis zu, wobei die Temperatur auf annähernd 0° absinkt. Bei dieser Temperatur werden, gegebenenfalls unter Eiszugabe, innerhalb von 10 Minuten portionenweise 7 Teile Natriumnitrit zugegeben. Nach einstündigem Nachrühren bei 0 bis 5° werden 0,7 Teile Aktivkohle zugesetzt, die Diazolösung wird klarfiltriert, und der Rückstand wird mit wenig Eiswasser gewaschen.

Herstellung der Kupplungskomponenten-Mischung/Trägerharz-Lösung

In einer 60° warmen Lösung von 12,3 Teilen NaOH in 190 Volumenteilen Wasser werden 25,6 Teile (0,0975 Mol) 2-Hydroxy-3-naphthoesäureanilid und 0,87 Teile (0,0025 Mol) 2-Hydroxynaphthalin-3,6-disulfonsäuredinatriumsalz (= R-Salz) gelöst. Nach dem Abkühlen dieser Lösung auf 40° werden 145,4 Teile einer 30%igen wässrig-ammoniakalischen Dispersion eines carboxylierten Acrylcopolymeren (z.B. ®Carboset XL - 11) zugegeben. Diese Lösung wird mit Eis auf ein Volumen von 500 ml gebracht.

Kupplung, Nachbehandlung und Ausfällen des Pigmentpräparates

Die vorgelegte, wie oben beschrieben erhaltene Kupplungskomponenten-Mischung/Trägerharz-Lösung (pH ca. 13,6) wird bei 10° innerhalb von 30 Minuten mit der Diazolösung versetzt, wobei der pH-Wert während der Kupplung durch Zutropfen von 1N-Natronlauge bei 12 bis 12,5 gehalten wird. Nach der Zugabe der Diazolösung werden 0,15 Teile Calciumchlorid (als wässrige Lösung) zur Bildung des Calciumsalzes zugegeben. Zur Herstellung von kleinen feinen Pigmentkristallen wird noch 2 Stunden durch Rühren bei 70° nachbehandelt. Dann wird der pH-Wert der Suspension durch langsames Zutropfen von 1N-Salzsäure bei 55° auf 4,5 eingestellt, wobei das Acrylatharz ausfällt. Nach einer Stunde Nachrühren

bei 55° wird das erhaltene Pigmentpräparat abfiltriert, mit kaltem Wasser neutral gewaschen und bei 70-80° im Vakuumtrockenschrank getrocknet. Man erhält 82,5 g (94,6% d.Th.) trockenes Pigmentpräparat mit einem Pigmentgehalt von 50%.

Das obige Pigmentpräparat wird beispielsweise gemäss nachstehendem Beispiel 8 zu einer wässrig-alkoholischen Druckfarbe weiterverarbeitet. Die erhaltene Druckfarbe wird auf ihre Lagerstabilität geprüft. Hierbei zeigt sich, dass die mit dem erfindungsgemässen Pigmentpräparat erhaltene Druckfarbe nach 7 Tagen Lagerung bei 5° bzw. 50° Drucke mit einer sehr guten Transparenz ergibt. Dabei bleibt der Farbton der mit dem erfindungsgemässen Präparat erhaltenen Drucke praktisch unverändert.
Setzt man im obigen Beispiel bei der Herstellung der Kupplungskomponenten-Mischung anstelle von 0,87 Teilen R-Salz 0,67 Teile (0,0025 Mol) 6-Brom-2,3-hydroxynaphthoesäure ein, so erhält man 82,9 Teile (95,1% d.Th.) eines Pigmentpräparats mit einem Pigmentgehalt von 50%. Aus diesem Pigmentpräparat kann nach dem in Beispiel 8 beschriebenen Verfahren eine Druckfarbe von gleich guter Lagerstabilität hergestellt werden.

Beispiel 5: Gemisch der Diazolösungen

16,5 Teile (0,098 Mol) 4-Nitro-2-methoxy-anilin und 0,44 Teile (0,002 Mol) 2-Amino-4-chlor-5-methylbenzolsulfonsäure werden separat wie in Beispiel 1a) und b) beschrieben mit Salzsäure und Natriumnitrit in wässriger Lösung diazotiert, und die beiden erhaltenen Diazolösungen werden anschliessend miteinander vermischt.

Kupplungskomponente-Lösung

In einer Lösung von 6 Teilen NaOH in 600 Volumenteilen Wasser werden 25,7 Teile 2-Methoxy-5-chlor-acetoacetanilid bei Raumtemperatur gelöst.

Kupplung, Nachbehandlung und Ausfällen des Pigmentpräparates

In das vorgelegte oben beschriebene Gemisch der Diazolösungen werden etwa 12 Teile kristallines Natriumacetat gegeben. Danach wird innerhalb von 30 Minuten bei 5 bis 10° und pH 4-4,5 die oben beschriebene Kupplungskomponente-Lösung zugetropft, wobei der pH-Wert mittels 1N-HCl konstant gehalten wird. Nach der Kupplung wird die erhaltene Pigmentsuspension mit 1N-Natronlauge auf pH 9 eingestellt. Dann gibt man 140 Teile einer 30%igen wässrigen carboxylierten Acryl-Copolymer-Dispersion (Carboset XL 11) zu, wobei der pH-Wert der Pigmentdispersion mittels 1N-Natronlauge auf 9 gehalten werden muss. Nach zweistündiger Nachbehandlung durch Rühren bei 70° wird das Trägerharz bei 55° durch langsames Zutropfen von 1N-Salzsäure bis pH 4,5 ausgefällt. Nach einstündigem Weiterrühren bei 55° wird das erhaltene Pigmentpräparat abfiltriert, mit Wasser neutral gewaschen und bei 70 bis 80° im Vakuum getrocknet. Man erhält 83,6 Teile (99% d.Th.) Pigmentpräparat mit einem Pigmentgehalt von 50%.

Eine mit dem obigen Pigmentpräparat erhaltene wässrig-alkoholische Druckfarbe zeigt eine gute Lagerstabilität, wobei Farbton, Farbstärke und Transparenz der Drucke praktisch unverändert bleiben.

Beispiel 6: Gemisch der Diazolösungen

16,8 Teile (0,0974 Mol) 4-Chlor-2-nitro-anilin und 0,57 Teile (0,0026 Mol) 2-Amino-4-chlor-5-methylbenzolsulfonsäure werden wie in den vorangehenden Beispielen beschrieben in wässriger Lösung separat diazotiert dann anschliessend vereinigt.

Kupplungskomponente-Lösung

In einer Lösung von 6 Teilen NaOH in 600 Volumenteilen Wasser werden 21,1 Teile (0,1 Mol) 2-Chloracetoacetanilid bei Raumtemperatur gelöst.

Kupplung, Nachbehandlung und Ausfällen des Pigmentpräparates

In das vorgelegte oben beschriebene Gemisch der Diazolösungen werden etwa 12 Teile kristallines Natriumacetat gegeben. Danach wird innerhalb von 30 Minuten bei 5 bis 10° und pH 4-4,5 die oben beschriebene Kupplungskomponente-Lösung zugetropft. Nach der Kupplung wird die erhaltene Pigmentsuspension mit 1N-Natronlauge auf pH 9 eingestellt und mit einer Lösung von 0,12 Teilen $CaCl_2$(97%ig) in 5 Volumenteilen Wasser zur Bildung des Calciumsalzes versetzt. Anschliessend werden 126 Teile einer 31,5%igen wässrigen carboxylierten Acryl-Copolymer-Dispersion (Carboset XL 11) zugegeben, wobei der pH-Wert der Pigmentdispersion mittels 1N-Natronlauge auf 9 gehalten werden muss. Nach zweistündiger Nachbehandlung durch Rühren bei 70° wird das Trägerharz bei 55° durch langsames Zutropfen von 1N-Salzsäure bis pH 4 ausgefällt. Nach einstündigem Weiterrühren bei 55° wird das erhaltene Pigmentpräparat abfiltriert, mit Wasser neutral gewaschen und bei 70 bis 80° im Vakuum getrocknet. Man erhält 72 Teile (92% d.Th.) Pigmentpräparat mit einem Pigmentgehalt von 50%.

Eine mit dem obigen Pigmentpräparat erhaltene wässrig-alkoholische Druckfarbe zeigt eine sehr gute Lagerstabilität, wobei Farbton, Farbstärke und Transparenz der Drucke praktisch unverändert bleiben.
Setzt man als Diazokomponente 14,9 Teile (0,098 Mol) 4-Amino-3-nitrotoluol anstelle von 16,8 Teilen 4-Chlor-2-nitroanilin und als Kupplungskomponente 19,9 Teile Acetoacetanilid anstelle von 21,1 Teilen 2-Chloracetoacetanilid sowie eine entsprechende Menge Trägerharz (108 Teile Carboset XL 11 als 31,5%ige Dispersion anstelle von 126 Teilen) gemäss obigem Beispiel 6 ein, so werden 66 Teile (96% d.Th.) Pigmentpräparat mit einem Pigmentgehalt von 50% erhalten.

Mit diesen Pigmentpräparaten erhaltene wässrig-alkoholische Druckfarben zeigen eine sehr gute Lagerstabilität, wobei Farbton, Farbstärke und Transparenz der Drucke praktisch unverändert bleiben.

Beispiel 7: Diazotierung

15,2 Teile (0,1 Mol) 4-Amino-3-nitrotoluol werden nach bekannten Methoden mittels Salzsäure und Natriumnitrit in wässeriger Lösung diazotiert.

Kupplungskomponenten-Mischung/Trägerharz-Lösung.

In einer Lösung von 12 Teilen NaOH in 500 Volumenteilen Wasser werden 14 Teile (0,0972 Mol) β-Naphthol und 0,52 Teile (0,0028 Mol) 2-Hydroxy-3-naphthoesäure bei Raumtemperatur gelöst. Dann werden 97,6 Teile Trägerharz Carboset XL 11 (31%ige Dispersion) zugegeben.

Kupplung, Nachbehandlung und Ausfällen des Pigmentpräparates

In die vorgelegte oben beschriebene Kupplungskomponenten-Lösung wird innerhalb von 30 Minuten bei 5 bis 10° und pH 11-12 die oben beschriebene Diazolösung zugetropft. Nach der Kupplung wird die erhaltene Pigmentsuspension mit 1N-Salzsäure auf pH 9 eingestellt und mit einer Lösung von 0,15 Teilen $CaCl_2$ (97%ig) in 5 Volumenteilen Wasser zur Bildung des Calciumsalzes versetzt. Nach zweistündiger Nachbehandlung durch Rühren bei 70°C wird das Trägerharz bei 55° durch langsames Zutropfen von 1N-Salzsäure bis pH 4,5 ausgefällt. Nach einstündigem Weiterrühren bei 55° wird das erhaltene Pigmentpräparat abfiltriert, mit Wasser neutral gewaschen und bei 70 bis 80° im Vakuum getrocknet. Man erhält 58,4 Teile (95% d.Th.) Pigmentpräparat mit einem Pigmentgehalt von 50%.

Eine mit dem obigen Pigmentpräparat erhaltene wässrig-alkoholische Druckfarbe zeigt eine sehr gute Lagerstabilität, wobei Farbton, Farbstärke und Transparenz der Drucke praktisch unverändert bleiben.

Beispiel 8: Herstellung einer Druckfarbe

12 Teile Pigmentpräparat 50%ig gemäss Beispiel 1 werden mit 56 Teilen einer Stammlösung aus 20 Teilen ®AQUAHYDE 100 (wasserlösliches 30%iges Acrylatharz, als Aminsalz vorliegend, Lawter Chemicals USA), 3 Teilen Morpholin und 33 Teilen Wasser 25 Minuten mit einem Flügelrührer bei 3000 UpM dispergiert. Nach Zugabe von 32 Teilen Aethanol wird noch 5 Minuten bei 3000 UpM weitergerührt. Die so erhaltene wässrig-alkoholische Druck- oder Lackierfarbe ist dann bereit, um beispielsweise auf Papier oder Weichaluminiumfolien ausgezogen zu werden.

Als zusätzliche Anwendungsbeispiele für Pigment-Acrylatharzpräparate für wässrige und alkoholische Druckfarben können die folgenden genannt werden:

Beispiel 9: Tiefdruckfarbe für PVC- und Papier-Tapeten

8 % Pigmentpräparat 50%ig gemäss Beispiel 1,
36 % ®Geon 351 (wässrige PVC-Copolymeremulsion mit einem Festkörpergehalt von 56%, B.F. Goodrich Chemical Company),
4 % ®ZINPOL 1519 (40%ige Acrylatharzlösung in Wasser/Isopropanol 1:1, pH 8,5, ZINCHEM USA),
30 % Wasser,
20 % Isopropanol,
2 % Ammoniak 25%ig.

Die Druckfarbe zeigt eine im Vergleich mit organischen Vinylcopolymer-Druckfarben überlegene Druckqualität und besitzt auch auf PVC-beschichteten Tapetenpapieren eine gute Haftfestigkeit. Die Drucke zeichnen sich ferner durch gute Prägbarkeit, Reibfestigkeit (trocken und nass) sowie gute Seifen- und Waschmittelbeständigkeit aus.

Beispiel 10: Tiefdruckfarbe für Dekorpapier mit Melaminharz-Schichtstoffen

10 % Pigmentpräparat 50%ig gemäss Beispiel 1,
40 % AQUAHYDE 100 (Lawter Chemicals, USA),
20 % Isopropanol,
28 % Aethylenglykolmonoäthyläther,
2 % Ammoniak 25%.

Die Drucke besitzen eine gute Ausblutbeständigkeit beim nachfolgenden Imprägnieren mit Melamin-Formaldehyd-Vorkondensat-Lösungen und weisen gute Hitzebeständigkeiten beim Verpressen bei 150° sowie eine hohe Lichtechtheit in den Schichtstoff-Platten auf.

Beispiel 11: Flexodruckfarbe

a) 15 % Pigmentpräparat 50%ig gemäss Beispiel 1,
10 % ZINPOL 14 (Wachsemulsion, ZINCHEM, USA),
20 % ZINPOL 259 (styrolisierte Schellackemulsion, ZINCHEM),
3 % Morpholin,
52 % Wasser.

b) 15 % Pigmentpräparat 50%ig gemäss Beispiel 1,
5 % ®JONCRYL 677 (Polyacrylatharz, Säurezahl ca. 180-190, Johnson-Wax, USA),
4 % Morpholin,
33 % Wasser,
33 % Aethanol 95%.

Diese Druckfarben eignen sich zum Bedrucken von Papier, vorlackierter Aluminium-Folie und Corona-vorbehandelter Polyäthylen-Folie.

Beispiel 12: Lack für Roller-Lackierung von Weich-Aluminium-Folie

5 % Pigmentpräparat 50%ig gemäss Beispiel 1,
14 % ® MOWITAL B30H (Polyvinylbutyral, Hoechst, Deutschland),
1 % Dibutylphthalat,
70 % Aethanol 95%ig,
10 % Aethylenglykolmonoäthyläther.

Der auf einer Lackiermaschine im Walzenauftrag-Verfahren aufgetragene Lack zeigt eine gute Haftfestigkeit, Flexibilität, hohe Transparenz, gute Ausblutbeständigkeit und hohe Lichtechtheit.

Beispiel 13: Flexodruckfarbe für Polyäthylen und Papier

15 % Pigmentpräparat 50%ig gemäss Beispiel 1,
5 % CAP 504-0.2 (Cellulose Aceto-Propionat, Eastman-Kodak, USA),
15 % Wasser,
65 % Isopropanol.

Die Druckfarbe zeichnet sich durch eine schnelle Antrocknung und eine gute Haftfestigkeit auf Corona-vorbehandelter Polyäthylen-Folie aus.

Beispiel 14: Trocken-Offset-Druckfarbe für Metall

20 % Pigmentpräparat 50%ig gemäss Beispiel 1,
30 % ® SETALYN AM 541 (Acrylmonomer, Kunstharsfabriek Synthese B.V., Holland),
44 % SETALYN AP 561 (Acrylpräpolymer, Kunstharsfabriek Synth.B.V.),
3 % Michlers Keton,
3 % Benzophenon.

Die Druckfarbe kann im Trocken-Offset auf vorlackiertes Stahlblech gedruckt und unter UV-Bestrahlung gehärtet werden. Die Drucke weisen einen hohen Glanz und gute Wasserbeständigkeiten auf.

Beispiel 15: Tiefdruckfarbe für verschiedene Bedruckstoffe

10 % Pigmentpräparat 50%ig gemäss Beispiel 1,
18 % ZINPOL 1519 (Polyacrylatharz 50%ig in Isopropanol, ZINCHEM),
10 % Wasser,
60 % Isopropanol,
2 % Ammoniak 25%.

Die Druckfarbe zeigt auf folgenden Materialien eine gute Haftfestigkeit: Weich-PVC, Hart-PVC, Zellglas X, Zellglas P, vorbehandelte Polyäthylen-Folie und vorlackierte Aluminium-Folie. Die Druckfarbe kann mit Wasser oder mit Alkoholen verdünnt werden.

Beispiel 16: 2-Komponenten-Lack für Tiefdrucklackierungen auf Papier

10 % Pigmentpräparat 50%ig gemäss Beispiel 1,
30 % AQUAHYDE 100 (Lawter Chemicals),
5 % ®CIBAMIN M 100 (Hexamethylolmelamin, Ciba-Geigy AG, Schweiz),
2 % Morpholin,
52,5% Wasser/Aethanol 1:1,
0,5% p-Toluolsulfonsäure.

Nach dem Trocknen während 2 Minuten bei 130° wird eine Lackierung mit sehr guter Wasser- und Aethanolbeständigkeit, einem sehr hohen Erweichungspunkt, guter Heissiegelbeständigkeit und guter Chemikalienbeständigkeit erzielt.

Patentansprüche:

1. Pigmentpräparat, enthaltend
1) 10-90 Gew.%, bezogen auf das gesamte Präparat, eines Pigmentgemisches aus

a) 99,5-90 Mol.%, bezogen auf das Pigmentgemisch, mindestens eines Monoazopigments der allgemeinen Formel I

$$A - N = N - B \qquad (I)$$ und

b) 0,5-10 Mol.%, bezogen auf das Pigmentgemisch, mindestens eines Monoazopigments der allgemeinen Formel II

$$(A' - N = N - B' \text{---} (X)_m \qquad (II),$$

worin A und A' Reste einer Diazokomponente der Benzol- oder Naphthalinreihe bedeuten, B und B' Reste einer Kupplungskomponente der Acetessigsäurearylamid-, Naphthol- oder Naphthoesäurearylamidreihe sind, X -COOH, $-SO_3H$, eine Gruppe der Formel III

$$-COO^{\ominus} \frac{Me}{n}^{n\oplus} \qquad (III),$$

oder der Formel IV

$$-SO_3^{\ominus} \frac{Me}{n}^{n\oplus} \qquad (IV),$$

worin Me ein Metall ist und m und n unabhängig voneinander die Zahlen 1, 2 oder 3 bedeuten, und

2) 90-10 Gew.%, bezogen auf das gesamte Präparat, eines carbonsäuregruppenhaltigen Polyacrylatharzes .

2. Pigmentpräparat gemäss Anspruch 1, dadurch gekennzeichnet, dass in den Formeln I und II jeweils

A einen Rest der Formeln

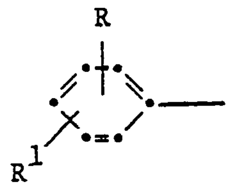

oder

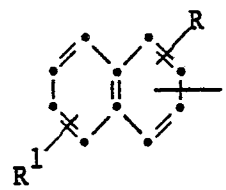

,

B einen Rest der Formeln

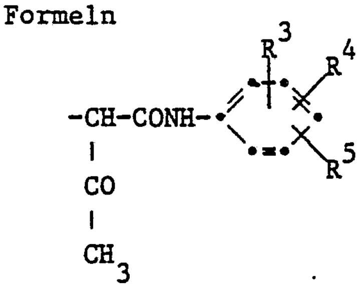

,

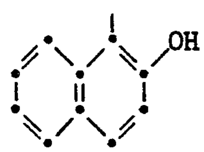

oder

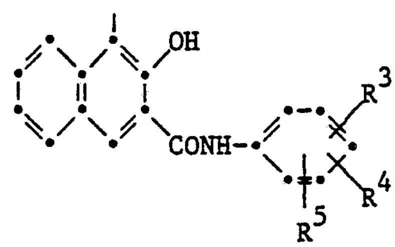

,

$A'-(X)_m$ einen Rest der Formeln

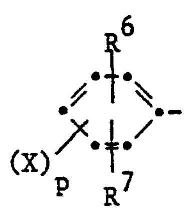

oder

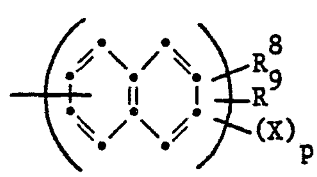

und

$B'-(X)_m$ einen Rest der Formeln

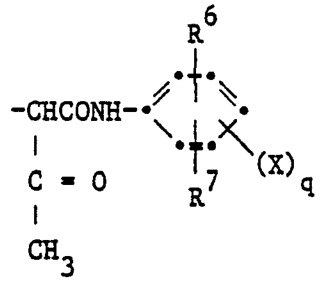,

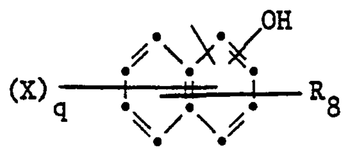 oder 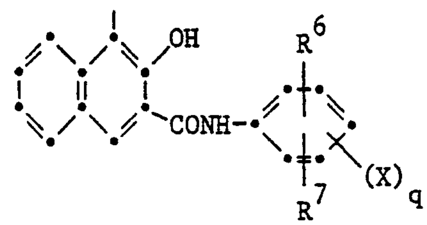

bedeuten, worin R und $R^1$ unabhängig voneinander Wasserstoff, Halogen, $C_1$-$C_2$ Alkyl, $C_1$-$C_2$ Alkoxy, $C_2$-$C_4$ Alkylcarbamoyl, $C_2$-$C_4$ Alkoxycarbonyl, Trifluormethyl oder Nitro, $R^3$, $R^4$ und $R^5$ unabhängig voneinander Wasserstoff, Halogen, $C_1$-$C_2$ Alkyl, $C_1$-$C_2$ Alkoxy, $C_2$-$C_4$ Alkylcarbamoyl oder Nitro, $R^6$ und $R^7$ unabhängig voneinander Wasserstoff, Halogen, Methyl, Methoxy, Trifluormethyl oder Nitro, $R^8$ und $R^9$ unabhängig voneinander Wasserstoff oder Halogen bedeuten, X die in Anspruch 1 angegebene Bedeutung hat, p und q unabhängig voneinander die Zahlen Null, 1,2 oder 3 bedeuten, mit der Bedingung, dass die Summe p + q mindestens 1 ist.

3. Pigmentpräparat gemäss Anspruch 1, dadurch gekennzeichnet, dass es mindestens ein Monoazopigment der Formeln V oder VI

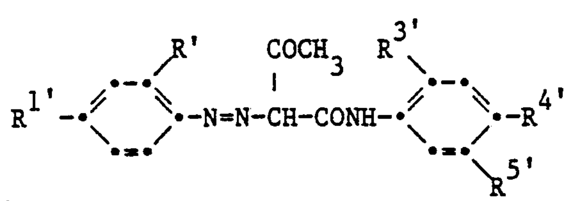 (V)

oder

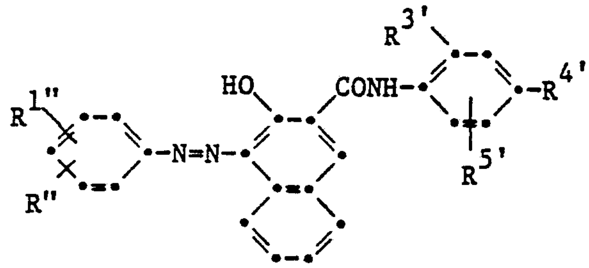

(VI)

und mindestens ein Monoazopigment der Formeln VII, VIII oder IX

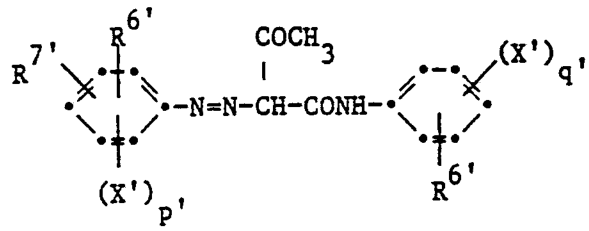

(VII),

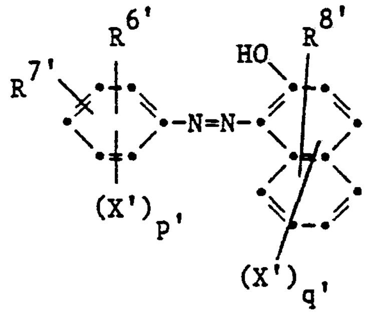

(VIII) oder

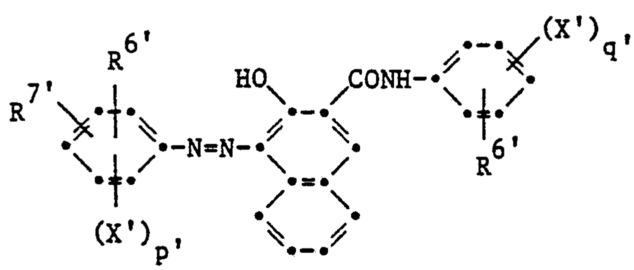

(IX) enthält,

worin R' und $R^{1'}$ unabhängig voneinander Wasserstoff, Chlor, Methyl, Methoxy, Aethoxy oder Nitro, R" und $R^{1''}$ unabhängig voneinander Wasserstoff, Chlor, Methyl, Methoxy oder Nitro, $R^{3'}$ und $R^{5'}$ unabhängig voneinander Wasserstoff, Chlor, Methyl, Methoxy oder Aethoxy, $R^{4'}$ Wasserstoff, Chlor, Methyl, Methoxy, Aethoxy oder Methylcarbamoyl,

$R^{6'}$ Wasserstoff, Chlor, Methyl, Methoxy oder Nitro, $R^{7'}$ Wasserstoff oder Chlor und $R^{8'}$ Wasserstoff oder Brom bedeuten, X' -COOH, $-SO_3H$ oder eine der beiden Gruppen der Formeln IIIa oder IVa

$$-COO^{\ominus}\frac{Me^{\oplus\oplus}}{2} \quad \text{oder} \quad -SO_3^{\ominus}\frac{Me^{\oplus\oplus}}{2}$$

(IIIa) (IVa)

bedeutet, worin Me Ca, Mg oder Sr sein kann, p' und q' unabhängig voneinander die Zahlen Null oder 1 bedeuten, mit der Bedingung, dass die Summe p' + q' mindestens 1 sein muss.

4. Pigmentpräparat gemäss Anspruch 3, worin X' eine Gruppe der Formeln IIIa oder IVa darstellt und Me Ca, Mg oder Sr ist.

5. Pigmentpräparat gemäss Anspruch 1, dadurch gekennzeichnet, dass es aus 30-70 Gew.% Pigmentgemisch 1) und 70-30 Gew.-% Polyacrylatharz 2) besteht.

6. Pigmentpräparat gemäss Anspruch 1, dadurch gekennzeichnet, dass es 1-3 Mol.%, bezogen auf das Pigmentgemisch, mindestens eines Monoazopigments der allgemeinen Formel II enthält.

7. Pigmentpräparat gemäss Anspruch 1, dadurch gekennzeichnet, dass es als Pigmentgemisch ein solches aus

a) einem Monoazopigment der Formel

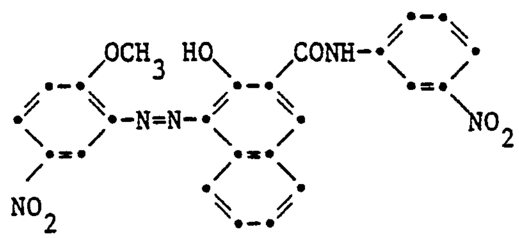

und

einem Monoazopigment der Formel

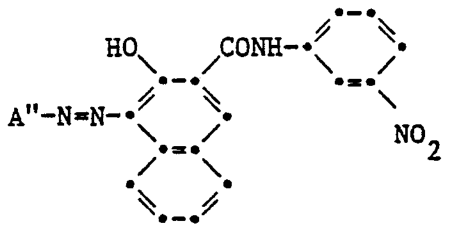

;

b) einem Monoazopigment der Formel

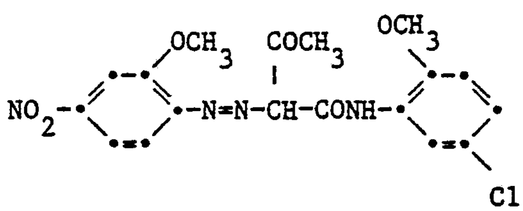

und

einem Monoazopigment der Formel

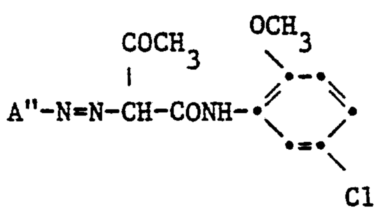

oder insbesondere ein Pigmentgemisch aus

c) einem Monoazopigment der Formel

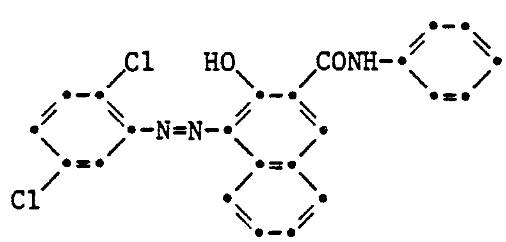

und

einem Monoazopigment der Formel

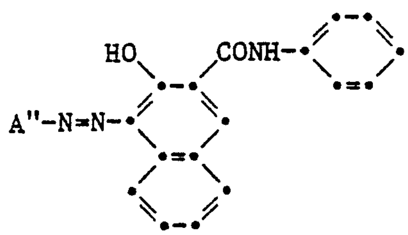

oder

d) einem Monoazopigment der Formel

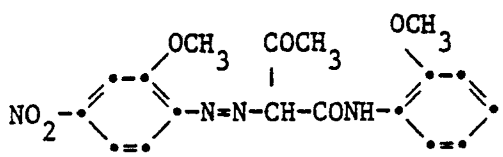

und

einem Monoazopigment der Formel

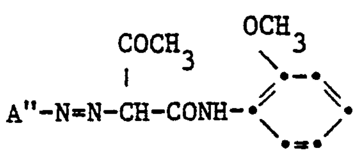

enthält, wobei A" 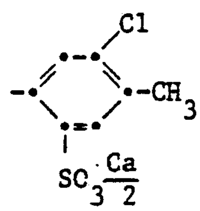 darstellt, und der

Anteil an $-SO_3\frac{Ca}{2}$-gruppenhaltigem Monoazopigment jeweils 1,5-3 Mol%, bezogen auf das Pigmentgemisch, beträgt.

8. Verfahren zur Herstellung eines Pigmentpräparats gemäss Anspruch 1, dadurch gekennzeichnet, dass man in wässrigem Medium eine Kupplungskomponente oder ein Gemisch von Kupplungskomponenten der Naphthol-, Naphthoesäurearylamid- oder Acetessigsäurearylamidreihe mit einer Diazoniumverbindung eines Amins der Benzol- oder Naphthalin-Reihe oder mit einem Gemisch solcher Diazoniumverbindungen im Molverhältnis von etwa 1:1 kuppelt, wobei der Anteil der freie Carbonsäure- oder Sulfonsäuregruppen enthaltenden Kupplungskomponenten und/oder Diazokomponenten 0,5-10 Mol.% betragen, muss, unter zusätzlicher Beimischung vor, während oder nach der Kupplung einer alkalischen Polyacrylatharzlösung, anschliessend gegebenenfalls zur Bildung der

Metallcarboxylate oder -sulfonate mit einem wasserlöslichen Salz eines Metalls der Wertigkeit n, wobei n die in Anspruch 1 angegebene Bedeutung hat umsetzt, das Harz durch Ansäuern als freie Säure ausfällt und das erhaltene Pigmentpräparat aufarbeitet.

9. Verwendung der Pigmentpräparate gemäss Anspruch 1 zum Pigmentieren von wässrigen, alkoholischen oder wässrig-alkoholischen Druck- und Lackierfarbensystemen.

10. Verwendung gemäss Anspruch 9, dadurch gekennzeichnet, dass wässrig-alkoholische Druck- und Lackierfarbensysteme pigmentiert werden.